# EUROPEAN PATENT APPLICATION

(11) **EP 2 090 391 A1**
(43) Date of publication of application: **19.08.2009**
(21) Application number: 08738801.3
(22) Date of filing: 25.03.2008
(51) Int. Cl.: B23B 51/00, B23B 51/06

(54) **DEEP HOLE CUTTING APPARATUS**

(30) Priority: 02.04.2007 JP 2007096630
(71) Applicant: UNITAC, Incorporated, Amagasaki-shi, Hyogo 661-0033 (JP)
(72) Inventor: NOMURA, Takuji, Amagasaki-shi Hyogo 661-0033 (JP); SAKAI, Makoto, Amagasaki-shi Hyogo 661-0033 (JP)
(74) Representative: Vossius & Partner
(86) International application number: PCT/JP2008/055506
(87) International publication number: WO 2008/123220

(57) **Abstract**

Provided is a deep hole cutting apparatus having a chip-replaceable guide pad on a cutting head section. With the deep hole cutting apparatus, high machining accuracy can be obtained in a stable cutting status and the service life of the guide pad is lengthened. A guide pad (7) is formed on a circular surface (71a) whose outer surface forms a top ridge section (7a) along the center portion in the width direction, and the guide pad is diagonally attached to a cutting head section (10a) so that the leading end side of the tool is closer to the front side in a tool rotating direction (y) compared with the rear end side of the tool.

## Description

### [Technical Field]

The present invention relates to a cutting apparatus used for deep-hole drilling work, and in particular, a deep hole cutting apparatus attached with a tip-replaceable guide pad on a cutting head portion.

### [Background Art]

A guide pad provided on an outer periphery of a cutting head portion in a deep hole cutting apparatus, in general, slidingly contacts with an inner circumference of a cutting hole during drilling, rendering an inner circumferential surface of the cutting hole receiving a cutting reaction force by a cutting blade. By a so-called burnishing action of keeping a physical relationship between the slidingly contacted area and the cutting blade constant all the time, the cutting head portion is maintained in a rotational state on a constant axis line without runout, thereby enhancing cutting accuracy. The guide pad also exhibits an action of crushing and smoothing unevenness on the inner circumference of the hole involved in cutting. A guide pad of this kind is sometimes integrally formed with the cutting head portion. In most cases, however, the guide pad is configured such that a tip made of a hard material such as cemented carbide, cermet and the like is brazed on or a similar tip is screwed to a pad mounting depression provided on the outer periphery of a cutting head portion made of steel. In particular, the latter screw type guide pad has an advantage of being detachably replaceable with a new one according to abrasion limits and damage. The guide pad is generally applied to a cutting head portion whose cutting blade is also a detachably replaceable throw-away tip.

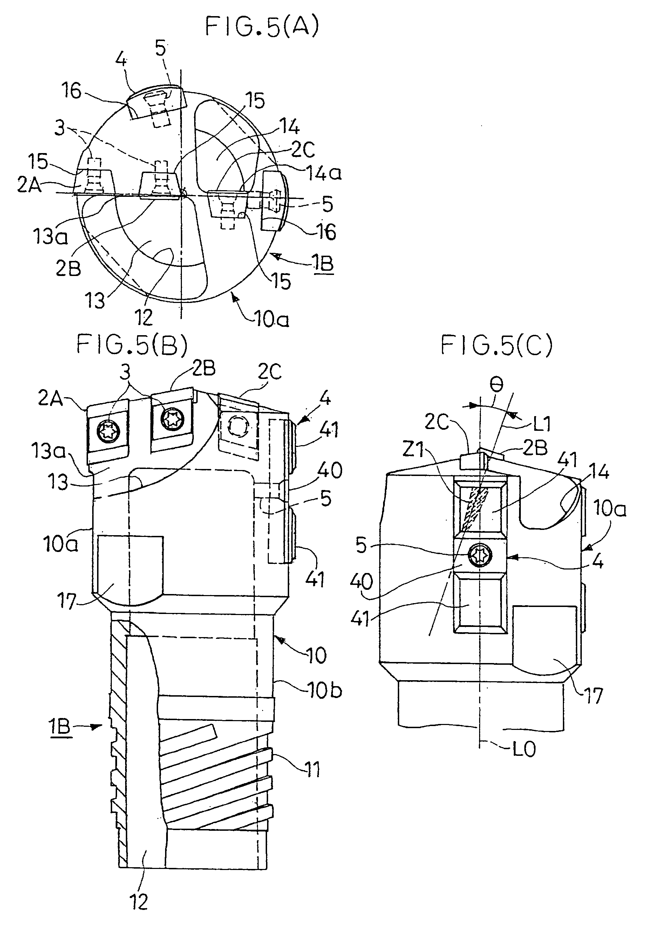

FIGS. 5A to 5C illustrate an example of a drill head in which guide pads and cutting blades are both tip-replaceable. In the drill head 1B, a cutting head portion 10a at a front side and a screw shank portion 10b at a rear side constitute a substantially cylindrical head body 10. The screw shank portion 10b is provided with a male thread 11 on an outer circumference thereof. The head body 10 has a hollow interior constituting a chip discharging passage 12 which is open to a rear end. The cutting head portion 10a has a front end surface provided with open chip discharging ports 13, 14 in large and small fan-shapes. The chip discharging ports 13, 14 are communicated with the cutting discharging passage 12. There are concavely provided three cutting blade mounting seats 15 along walls 13a, 14a of the chip discharging ports 13, 14. On the cutting blade mounting seats 15, three cutting blades 2A to 2C of outer peripheral side, central and intermediate ones composed of throw-away tips respectively are fixed via mounting screws 3. Two groove-shaped pad mounting depressions 16 along a head axis direction are concavely provided in respective locations on an outer peripheral surface of the cutting head portion 10a. Guide pads 4 in a shape of a substantially thick strip are fixed on the pad mounting depressions 16 via mounting screws 5, respectively. Reference numeral 17 in the drawing denotes a pair of chucking flat portions formed in the opposed positions in a radial direction on the rear side of the outer peripheral surface of the cutting head portion 10a.

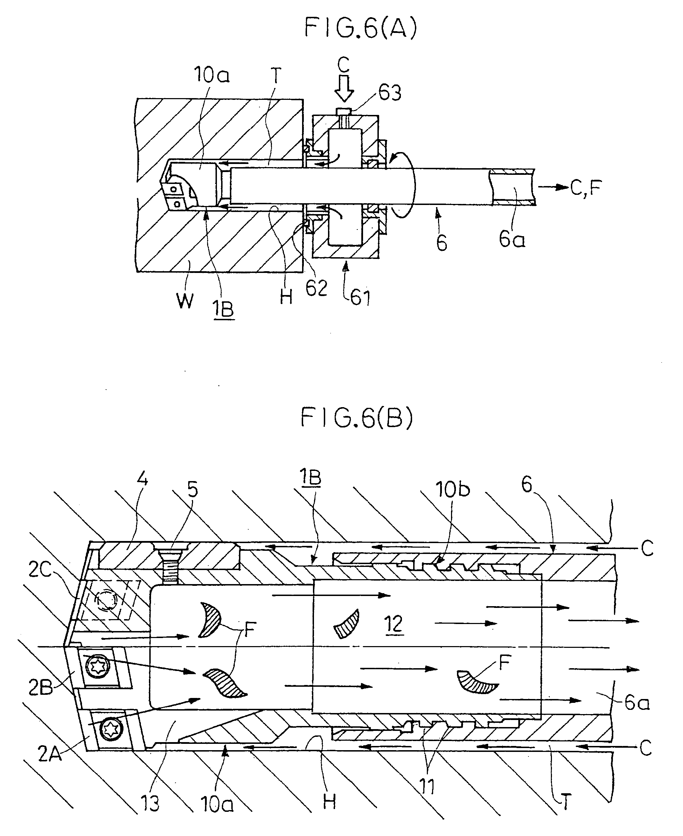

As shown in FIG. 6A, cutting work is carried out by coupling a circular tubular tool shank (also referred to as a boring bar) 6 of a drill for deep-hole cutting to a spindle of a machine tool and rotatingly driving the tool shank 6 or rotating a workmaterial W side reversely while the drill head 1B is coupled to a distal end of the tool shank 6 by threadedly inserting the screw shank portion 10b. A tool rotational direction hereinafter means a relative rotational direction of a tool with respect to a work material W in the work, including the cutting work by rotational driving of the latter work material W side.

In this case, a coolant C is supplied in the manner of an external supply system. While a coolant supply jacket 61 encompassing the tool shank 6 oil-tight as shown is pressed contacted with the work material W via a seal ring 62, the coolant C is introduced from an introduction port 63 into the coolant supply jacket 61 under high pressure. The coolant C is then supplied to a distal end side of the drill head 1B through a gap T between an outer peripheral surface of the tool shank 6 and an inner circumferential surface of a cutting hole H. The coolant C flows into the chip discharging passage 12 from the chip discharging ports 13, 14 of the drill head 1B together with chips F produced in a cutting region, as shown in FIG. 6B. After that, the coolant C is discharged to the outside, passing a chip discharging passage 6a in the tool shank 6. During the cutting work, cutting reaction force is received on the inner circumferential surface of the cutting hole H by the guide pads 4 which slidingly contact with the inner circumference of the cutting hole H. Accordingly, the rotational state of the drill head 1B is maintained stable, and the inner circumference of the hole is smoothed.

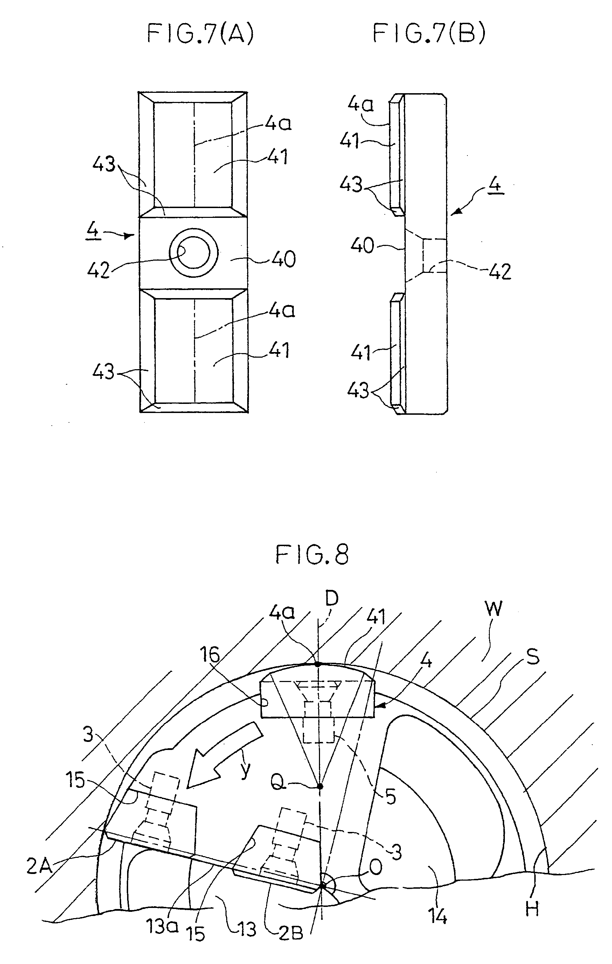

As shown in FIGS. 7A and 7B, each guide pad 4 has an outer surface configured with a flat portion 40 at the center in the longitudinal direction thereof and both sides configured with circular arc-shaped swelling portions 41. A threaded hole 42 is provided in the flat portion 40. As shown in FIG. 8, each swelling portion 41 of the guide pad 4 has a chamfered 43 periphery. A surface except for the chamfered 43 periphery has a smaller radius of curvature than a cutting circle S by the outer peripheral side cutting blade 2A in order to prevent a bite into the inner circumference of the cutting hole H. Additionally, the surface forms a circular arc-shaped surface whose circular arc center Q is located on a diameter D passing the rotation center O of the drill head 1B. The surface constitutes a top ridge 4a which is highest in outward protruding height along a central part in a width direction in a mounted state onto the drill head 1B. The top ridge 4a in an unworn stage is configured to have a height coincident with the cutting circle S by the outer peripheral side cutting blade 2A at the distal end side of the head.

### [Disclosure of the Invention]

### [Problems to be Solved by the Invention]

A new guide pad was attached to a drill head in a deep hole cutting apparatus of this kind, and then abrasion patterns on the surface of the guide pad were examined in the stage of reaching a certain number of uses. It was found that the center of an abraded area was shifted further backward in a tool rotational direction apart from a tool distal end, in general. Thus, as shown in FIG. 5C, an abrasion center line L1 of an abraded area Z1 shown by hatching in broken lines is inclined at an angle θ relative to a tool axis direction L0 in the aforementioned conventional deep hole cutting apparatus. A width of the abraded area Z1 is extended together with advance of the abrasion without the inclination itself being changed. In the stage shown, abrasion is not caused on a swelling portion 41 at a distant side from the head distal end due to the inclination of the abrasion center line L1. The reason why the abraded area Z1 is enlarged toward its end is that the cutting head portion 10a of the drill head 1B is generally configured into a slightly club-shaped and tapered as a whole.

The whole of the abraded area Z1 corresponds to a slide contact area which renders the inner circumference of the cutting hole H receiving a cutting reaction force. Accordingly, contact to the inner circumferential surface of the cutting hole H as a guide pad as a whole becomes unequal under circumstances where the abrasion center line L1 is inclined. In addition to that, since the circular arc-shaped surface of the swelling portion 41 has a smaller radius of curvature than the cutting circle S, slide contact at a position displaced from the center in the width direction of the swelling portion 41 turns stress by pressed contact to the inner circumference of the cutting hole H toward a direction away from the tool center. This results in destabilizing a cutting state, reducing working accuracy, and the unequal abrasion shortens the service life of the guide pad itself.

The present invention was made in view of the foregoing circumstances, and accordingly an object of the present invention is to provide a deep hole cutting apparatus provided with a tip-replaceable guide pad on a cutting head portion and being capable of obtaining high working accuracy in stable cutting states and also extending the service life of the guide pad.

### [Means for Solving the Problems]

In order to achieve the above-mentioned object, a first aspect of the present invention, described with reference symbols in the drawings, is configured such that in a deep hole cutting apparatus provided with a guide pad 7 which is detachably attached to a pad mounting depression 18 formed on an outer periphery of a cutting head portion 10a via a mounting screw 5 and slidingly contacts with an inner circumference of a cutting hole H, the guide pad 7 has an outer surface formed into a convex curved surface (circular arc-shaped surface 71a) constituting a top ridge 7a along a central part in a width direction. The guide pad 7 is attached slantingly arranged relative to the cutting head portion 10a in such a manner that a tool distal end side thereof is further forward in a tool rotational direction y than a rear end side thereof.

A second aspect of the present invention is configured such that the convex curved surface of the outer surface in the guide pad 7 constitutes a circular arc-shaped surface 71a with a smaller radius of curvature than a cutting circle S by a cutting blade (outer peripheral side cutting blade 2A) in the deep hole cutting apparatus of the first aspect.

A third aspect of the present invention is configured such that the guide pad 7 has a center line in the width direction (an inclination direction L2) inclined at an angle θ of 10 to 40 degrees relative to a tool axis direction L0 in the deep hole cutting apparatus of the first aspect.

A fourth aspect of the present invention is configured such that the guide pad includes a central low portion (a flat portion 70) with a threaded hole 72 and swelling portions 71 on both sides of the central low portion, each of the swelling portions 71 having an outer surface made into the convex curved surface.

### [Effects of the Invention]

According to the deep hole cutting apparatus in accordance with the first aspect of the present invention, the guide pad screwed onto the outer periphery of the cutting head portion is slantingly arranged in such a manner that the tool distal end side thereof is further forward in the tool rotational direction than the rear end side thereof, so that a direction of the top ridge of the convex curved surface on the outer surface side comes close to a direction of a center line of abrasion involved in the work. As a result, the guide pad as a whole equally contacts with the inner circumferential surface of the cutting hole. Additionally, the contacted area is put into a position along the center in the width direction of the guide pad, and stress by pressed contact to the inner circumference of the cutting hole is turned toward the tool center. Consequently, the cutting state becomes stable, which leads to an improvement of working accuracy, and equalization of abrasion extends the service life of the guide pad itself.

According to the second aspect of the present invention, the convex curved surface on the outer surface side of the guide pad is a circular arc-shaped surface with a smaller radius of curvature than the cutting circle by the cutting blade. As a result, a bite into the inner circumferential surface of the cutting hole can be prevented, and forming the convex curved surface of the outer surface is facilitated in manufacturing of the guide pad.

According to the third aspect of the present invention, the center line in the width direction of the guide pad is inclined at an appropriate angular range relative to the axis direction of the cutting head portion. Therefore, the direction of the top ridge of the convex curved surface on the outer surface side comes closer to the direction of the center line of abrasion involved in the work, whereupon working accuracy is further improved.

For use in deep-hole drilling with a large cutting diameter, the guide pad has an elongated shape with swelling portions which are provided on both sides of the screwed portion and slidingly contact with the inner circumference of the cutting hole, so that the guide pad is normally adversely affected by the inclination of the abrasion center line with ease. According to the fourth aspect of the present invention, however, the slanting arrangement allows the whole of the guide pad to be equally contacted with the inner circumferential surface of the cutting hole. As a result, the adverse effect can be eliminated.

### [Brief Description of the Drawing]

FIG. 1 illustrates a drill head used in a deep hole cutting apparatus in accordance with an embodiment of the present invention; FIG. 1A is a plan view, FIG. 1B is a side view of the whole and FIG. 1C is a side view of a cutting head portion.
FIG. 2 illustrates a head body of the drill head; FIG. 2A is a plan view and FIG. 2B is a side view of the cutting head portion.
FIG. 3 is a perspective view of a guide pad screwed on the drill head.
FIG. 4 illustrates a guide pad mounting portion in the drill head; FIG. 4A is a plan view and FIG. 4B is a cross-sectional view taken along arrows X-X in FIG. 1B.
FIG. 5 illustrates a drill head used in a conventional deep hole cutting apparatus; FIG. 1A is a plan view, FIG. 1B is a side view of the whole and FIG. 1C is a side view of a cutting head portion.
FIG. 6 illustrates deep-hole drilling work by a deep hole cutting apparatus; FIG. 6A is a longitudinal sectional side view and FIG. 6B is a longitudinal sectional side view showing the cutting head portion side in an enlarged manner.
FIG. 7 illustrates a guide pad used in the conventional deep hole cutting apparatus; FIG. 7A is a front view and FIG. 7B is a side view.
FIG. 8 is a plan view showing a main part of the drill head in the conventional deep hole cutting apparatus.

### [Description of Symbols]

1A Drill head
10a Cutting head portion
18 Pad mounting depression
2A to 2C Cutting blades
5 Mounting screw
7 Guide pad
7a Top ridge
70 Flat portion (central low portion)
71 Swelling portion
71a Circular arc-shaped surface
H Cutting hole
L0 Tool axis direction
L2 Inclination direction (center line in width direction)
S Cutting circle
Y Tool rotational direction

### [Best Mode for Carrying Out the Invention]

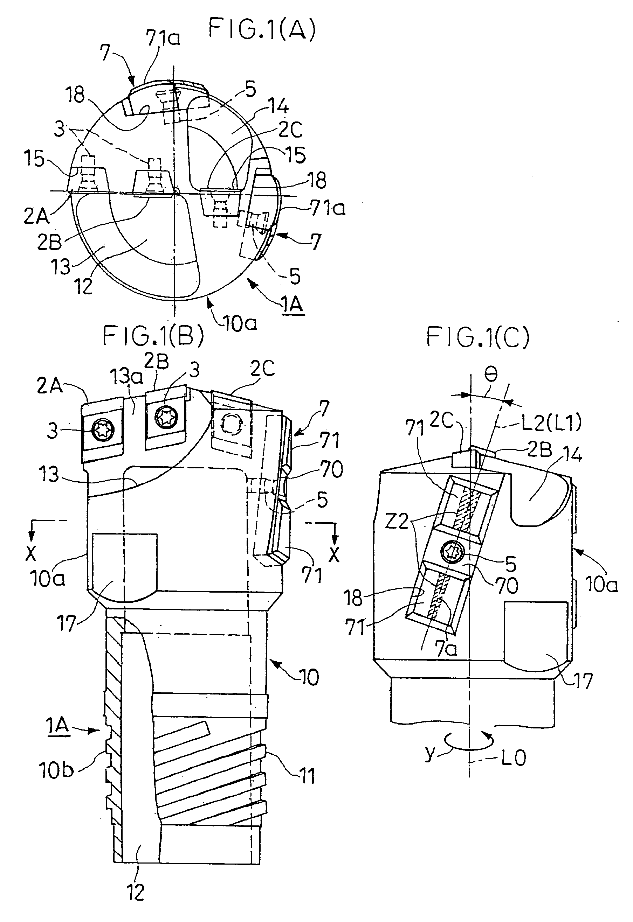

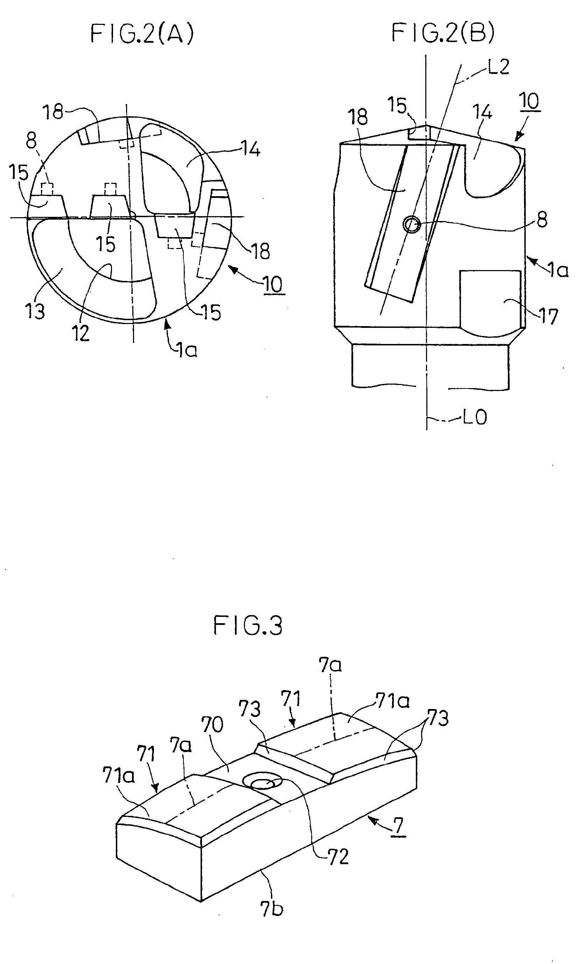

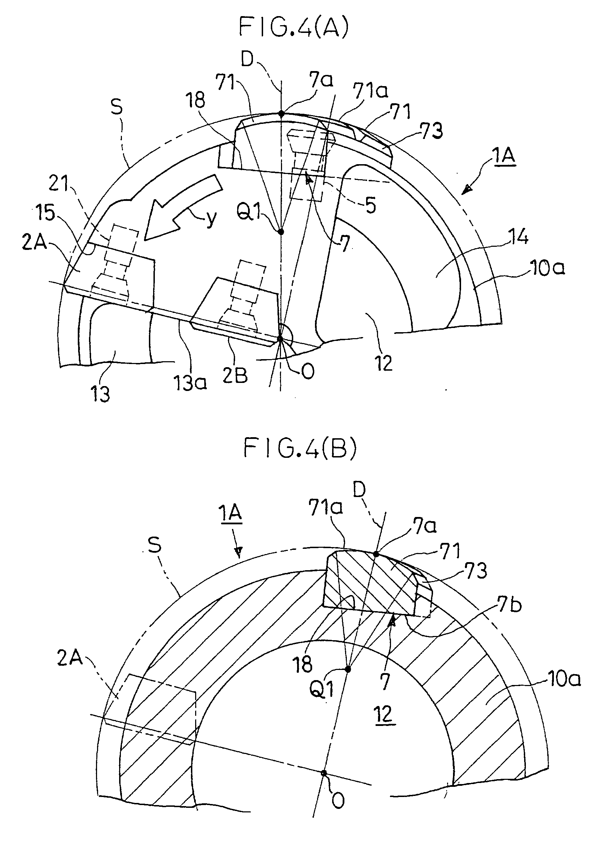

Hereinafter, an embodiment of a deep hole cutting apparatus in accordance with the present invention is described in detail with reference to the drawings. FIGS. 1A to 1C illustrate a drill head 1A in the deep hole cutting apparatus of the embodiment. FIGS. 2A to 2B illustrate a head body 10 of the drill head 1A. FIG. 3 illustrates a guide pad 7 used in the drill head 1A. FIGS. 4A and 4B illustrate a mounting portion of the guide pad 7 in the drill head 1A. In the deep hole cutting apparatus of the embodiment, the drill head 1A has exactly the same fundamental structure as the aforementioned conventional drill head 1B shown in FIGS. 5A to 5C except for forms of guide pads 7 and pad mounting depressions 18. Therefore, common components between the drill heads 1A and 1B are denoted by the same reference symbols and their explanations are omitted.

In the drill head 1A, as shown in FIGS. 1A to 1C, guide pads 7 which are rectangular when viewed from the front and composed of a hard material such as cemented carbide, cermet and the like are fixed via mounting screws 5 to respective pad mounting depressions 18 provided in two locations on the outer peripheral surface of the cutting head portion 10a of the head body 10, while each guide pad 7 is arranged slantingly along the inclination direction L2 which forms an angle θ relative to the tool axis direction L0 in such a manner that a tool distal end side which is one of both sides in the longitudinal direction of the guide pad 7 is further forward in a tool rotational direction y than a rear end side which is the other of both sides in the longitudinal direction of the guide pad 7.

Each guide pad 7 assumes a substantially thick strip shape on the whole, as shown in FIG. 3. The guide pad 7 has an upper surface which becomes an outer surface in a mounted state on the drill head 1A and is composed of a flat portion 70 at the midpoint in the longitudinal direction thereof and swelling portions 71 on both sides thereof. A threaded hole 72 is provided in the flat portion 70. The upper surface of each swelling portion 71 constitutes a circular arc-shaped surface 71a. The periphery of the upper surface is provided with chamfering 73. The circular arc-shaped surfaces 71a of the swelling portions 71 are not parallel to a flat lower surface 7b in the guide pad 7 itself and apparently form twisted upper surfaces to each other. However, the circular arc-shaped surfaces 71a in fact constitute surfaces on the same circumference.

More specifically, as shown in FIGS. 4A to 4B, both circular arc-shaped surfaces 71a of each guide pad 7 are configured such that a point Q1 on a diameter D passing the center O of the drill head 1A and being regarded as a bisector becomes a circular arc center in any position in the longitudinal direction of the guide pad 7 in the mounted state where the guide pad 7 is arranged slantingly onto the drill head 1A. Since the circular arc-shaped surfaces 71a have a smaller radius of curvature than the cutting circle S by the outer peripheral side cut ting blade 2A, the surfaces 71a constitute a top ridge 7a along a central part in a width direction of the guide pad 7 (a bisector in a width direction). The top ridge 7a is the highest in outward protruding height in the tool radial direction. The top ridge 7a is configured to be substantially coincident with or be slightly higher than the cutting circle S in an unworn state.

On the other hand, as shown in FIGS. 2A and 2B, each pad mounting depression 18 of the head body 10 corresponds to the slanting arrangement of the guide pad 7 and is formed into a groove shape along the inclination direction L2 relative to the tool axis direction L0. The groove shape constitutes a flat bottom surface. A screw hole 8 is provided in a central part of the bottom surface.

Here, a direction of the slanting arrangement of the guide pad 7, that is, the inclination direction L2 shown in FIGS. 1C and 2B, is coincident with a direction of the inclined abrasion center line L1 (see FIG. 5C) of the abraded area Z1 on the foregoing conventional guide pad 4.

The drill head 1A thus configured is provided for required deep-hole drilling work as the screw shank portion 10b is threadedly inserted and coupled to the distal end of the tool shank 6 in the same manner as the drill head 1B of the drill for deep-hole cutting (see FIGS. 6A and 6B), as mentioned above. Each guide pad 7 slidingly contacts with the inner circumference of the cutting hole H during the deep-hole drilling work, whereby cutting reaction force is received on the inner circumferential surface of the cutting hole H via the guide pad 7. Additionally, unevenness on the inner circumference of the hole involved in cutting is smoothed. However, abrasion is caused on the outer surface of the guide pad 7 due to slide contact with the inner circumference of the cutting hole H. The center of the abraded area is shifted further backward in the tool rotational direction apart from the tool distal end.

The guide pad 7 screwed to the outer periphery of the cutting head portion 10a is slantingly arranged in the deep hole cutting apparatus. As shown in FIG. 1C, the inclination direction L2 of the slanting arrangement is coincident with the direction of the abrasion center line L1 of the abraded area Z2. The top ridge 7a of the circular arc-shaped surfaces 71a which constitute the upper surfaces of the swelling portions 71 is made into the abrasion center. Thus, the guide pad 7 as a whole equally contacts with the inner circumferential surface of the cutting hole H during the cutting work. The contacted area is constantly located along the center in the width direction of the guide pad 7, so that stress by pressed contact to the inner circumference of the cutting hole H is turned toward the tool center. Accordingly, an ideal burnishing action can be exhibited, and high working accuracy resulting from a highly stable cutting state can be obtained. Such equalization of abrasion also extends the service life of the guide pad 7 itself.

It is preferable that an angle θ between the tool axis direction L0 and the inclination direction L2 of the slantingly arranged guide pad 7 is in the range of 10 to 40 degrees in general although an optimum range varies in accordance with a tool diameter (a cutting hole diameter) and cutting conditions. More specifically, the guide pad 7 is rendered difficult to be brought into contact with the inner circumferential surface of the cutting hole H equally if the angle θ is too small or too large. Specifically, the smaller radius of curvature than the cutting circle S the circular arc-shaped surface 71a has, the less stable the cutting state becomes since a direction of stress by pressed contact is deviated from the tool center. For the purpose of an optimum slanting arrangement of the guide pad 7, it is preferable to check an inclination of the abrasion center line under working conditions to be handled beforehand and then set the guide pad 7 at an arrangement angle corresponding to the inclination.

In order to manufacture the guide pad 7 provided with the circular arc-shaped surface 71a as described above, a rawmaterial with a grinding margin is used as a raw material of the guide pad 7. The raw material is supported on an appropriate support base in the same slanting arrangement as when attached to the head body. The grinding margin may be cut by rotational grinding work of rotatingly driving the support base side or the grinding tool side.

The guide pad used in the deep hole cutting apparatus of the present invention is not limited to a substantially thick strip guide pad with a pair of swelling portions which are provided on both sides of the screwed portion and brought into slide contact with the inner circumference of the cutting hole as exemplified in the foregoing embodiment, and various forms can be adopted, for example, a guide pad configured such that a strip length is shortened and a single swelling portion having a threaded hole in the center thereof is provided. The outline of the guide pad may be a parallelogram when viewed from the front, in which a short side is perpendicular to the tool axis line direction L0, other than a rectangle when viewed from the front as exemplified. As a material of the guide pad, a hard material such as cemented carbide, cermet and the like may be used only for the surface side of the swelling portion which is subjected to slide contact with the inner circumference of the cutting hole and an inexpensive material such as common steel may be used for other parts as a base, in addition to using a hard material for the entire guide pad.

Additionally, the surface of the swelling portion in the guide pad may be variously configured with a variety of curved surfaces and combinations of curved surfaces and inclined surfaces. However, it is preferable that a main part including the top be a circular arc-shaped surface in terms of workability. By rendering the radius of curvature smaller than the cutting circle by the cutting blade, the circular arc-shaped surface including the top can be easily configured into a dimensional shape which prevents the front edge in the tool rotational direction of the guide pad from biting into the inner circumference of the cutting hole.

In the embodiment, the drill head 1A provided with three cutting blades 2A to 2C of an outer peripheral side, central and intermediate ones on the cutting head portion 10a thereof is exemplified. However, the present invention is applicable to a case where the number of cutting blades on the cutting head portion is one, two or four or more. The present invention can also be applied to a deep hole cutting apparatus in which a cutting head portion is integrally formed with a tool shank without being independent as a drill head. Furthermore, in a case where the cutting head portion constitutes an independent component as a drill head, a coolant internal supply system (double tube system) may be employed instead of the coolant external supply system (single tube system) as shown in FIG. 6. The internal supply system is configured such that the drill head is connected to a double-tube tool shank, a coolant is delivered from a coolant supply passage between inner and outer cylinders of the tool shank to the outside of the drill head and then the delivered coolant is, together with chips, flown from a coolant discharging port of the drill head to a coolant discharging passage within the inner cylinder of the tool shank.

## Claims

1. A deep hole cutting apparatus comprising:
a pad mounting depression formed on an outer periphery of a cutting head portion; and
a guide pad detachably attached to the pad mounting depression via a mounting screw and slidingly contacting with an inner circumference of a cutting hole;
wherein the guide pad has an outer surface formed into a convex curved surface constituting a top ridge along a central part in a width direction, and the guide pad is attached slantingly arranged relative to the cutting head portion in such a manner that a tool distal end side thereof is further forward in a tool rotational direction than a rear end side thereof.

2. The deep hole cutting apparatus according to Claim 1, wherein the convex curved surface of the outer surface in the guide pad constitutes a circular arc-shaped surface with a smaller radius of curvature than a cutting circle by a cutting blade.

3. The deep hole cutting apparatus according to Claim 1, wherein the guide pad has a center line in the width direction inclined at an angle of 10 to 40 degrees relative to a tool axis direction.

4. The deep hole cutting apparatus according to any one of the preceding claims, wherein the guide pad comprises a central low portion with a threaded hole and swelling portions on both sides of the central low portion, each of the swelling portions having an outer surface made into the convex curved surface.
